# EUROPEAN PATENT APPLICATION

(11) **EP 3 101 854 A1**
(43) Date of publication of application: **07.12.2016**
(21) Application number: 15740879.0
(22) Date of filing: 21.01.2015
(51) Int. Cl.: H04L 12/947

(54) **OPENFLOW-BASED GROUP TABLE PROCESSING METHOD AND DEVICE, AND GROUP TABLE CONFIGURATION UNIT**

(30) Priority: 27.01.2014 CN 201410040822
(71) Applicant: ZTE Corporation, Shenzhen, Guangdong 518057 (CN)
(72) Inventor: CHEN, Ran, Shenzhen Guangdong 518057 (CN); LIANG, Qiandeng, Shenzhen Guangdong 518057 (CN); JIAO, Xinwen, Shenzhen Guangdong 518057 (CN)
(74) Representative: Brunazzi, Stefano
(86) International application number: PCT/CN2015/071252
(87) International publication number: WO 2015/110020

(57) **Abstract**

Provided are a method and device for processing an OpenFlow-based group table, a group table configuration unit, a capable switch and a Software Defined Network (SDN) system. The method includes that: a connection is established with a capable switch according to a network configuration protocol; and through the established connection, group table resources of a group table are issued to a logical switch in the capable switch. The present disclosure solves the problem in the related art of how to conduct complete configuration on effective resources in the group table resources, and then achieves the effect of conducting effective and complete configuration on the group table resources.

## Description

### Technical Field

The present disclosure relates to the field of communication, and in particular to a method and device for processing an OpenFlow-based group table, a group table configuration unit, a capable switch, and a Software Defined Network (SDN) system.

### Background

The SDN is a new network architecture; an OpenFlow protocol, as a core technology, achieves the flexible control of network traffic and provides a good platform for innovation of core network and application by separating a control plane of a network device (including an OpenFlow controller) from a data plane of the network device (including an OpenFlow capable switch).

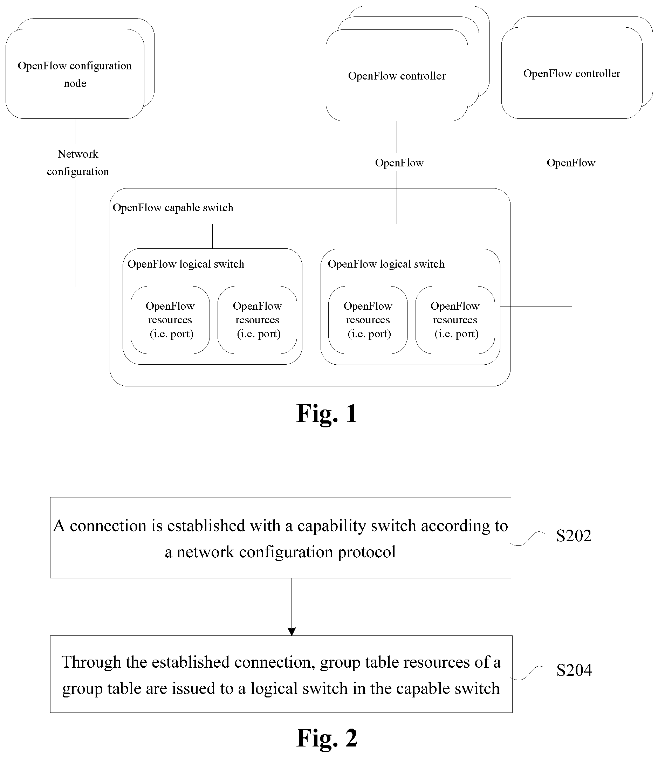

Fig. 1 is an application diagram of an OpenFlow configuration protocol and OpenFlow in a related art; as shown in Fig. 1, the OpenFlow protocol defines multiple OpenFlow resources on the capable switch, including queues, ports, authentications, flow tables, group tables, measurement tables, and so on.

However, the existing OpenFlow configuration and management protocol provides merely a method for an OpenFlow configuration node to configure and allocate queues, ports, authentications, and flow tables to an OpenFlow logical switch. For group table resources, the group table type and group table capability are involved merely in logical switch capability configuration; but the group table type and group table capability cannot express all contents of the group table resources; for example, the maximum number of buckets supported by group table entries, and what specific action operations are supported by the group table entries.

Therefore, a problem of how to conduct complete configuration on the effective resources in the group table resources exists in the related art.

### Summary

The present disclosure provides a method and device for processing an OpenFlow-based group table, a group table configuration unit, a capable switch, and an SDN system, so as to at least solve the problem in the related art of how to conduct complete configuration on the effective resources in the group table resources.

According to one embodiment of the present disclosure, a method for processing an OpenFlow-based group table is provided, including: establishing a connection with a capable switch according to a network configuration protocol; and issuing, through the established connection, group table resources of a group table to a logical switch in the capable switch.

In an example embodiment, the group table resources comprise at least one of following: a maximum number of supported group table entries, a maximum number of supported buckets, a group type, a group capability, and an action type of the group table.

In an example embodiment, issuing, through the established connection, the group table resources of the group table to the logical switch in the capable switch includes: acquiring group table resources information of the group table resources by using a get-config operation in the network configuration protocol.

In an example embodiment, issuing, through the established connection, the group table resources of the group table to the logical switch in the capable switch includes: issuing the group table resources of the group table to the logical switch in the capable switch by using an edit-config operation in the network configuration protocol.

In an example embodiment, issuing, through the established connection, the group table resources of the group table to the logical switch in the capable switch includes: modifying the issued group table resources by using an edit-config operation in the network configuration protocol.

In an example embodiment, through the established connection, issuing the group table resources of the group table to the logical switch in the capable switch includes: deleting the issued group table resources by using a delete-config operation in the network configuration protocol.

According to another embodiment of the present disclosure, a method for processing an OpenFlow-based group table is provided, including: establishing a connection with a group table configuration unit according to a network configuration protocol; and distributing group table resources of a group table, which are issued by the group table configuration unit and received through the established connection, to a logical switch.

In an example embodiment, distributing the group table resources of the group table, which are issued by the group table configuration unit and received through the established connection, to the logical switch includes: acquiring group table resources information of the group table resources by using a get-config operation in the network configuration protocol.

In an example embodiment, distributing the group table resources of the group table, which are issued by the group table configuration unit and received through the established connection, to the logical switch includes: modifying the group table resources by using an edit-config operation in the network configuration protocol.

In an example embodiment, distributing the group table resources of the group table, which are issued by the group table configuration unit and received through the established connection, to the logical switch includes: deleting the group table resources by using a delete-config operation in the network configuration protocol.

According to an embodiment of the present disclosure, a device for processing an OpenFlow-based group table is provided, including: a first establishing component, configured to establish a connection with a capable switch according to a network configuration protocol; and an issuing component, configured to issue, through the established connection, group table resources of a group table to a logical switch in the capable switch.

In an example embodiment, the issuing component includes: a first acquiring element, configured to acquire group table resources information of the group table resources by using a get-config operation in the network configuration protocol.

In an example embodiment, the issuing component includes: an issuing element, configured to issue the group table resources of the group table to the logical switch in the capable switch by using an edit-config operation in the network configuration protocol.

In an example embodiment, the issuing component includes: a first modifying element, configured to modify the issued group table resources by using an edit-config operation in the network configuration protocol.

In an example embodiment, the issuing component includes: a first deleting element, configured to delete the issued group table resources by using a delete-config operation in the network configuration protocol.

According to another embodiment of the present disclosure, a group table configuration unit is provided, including the above device.

According to an embodiment of the present disclosure, a device for processing an OpenFlow-based group table is provided, including: a second establishing component, configured to establish a connection with a group table configuration unit according to a network configuration protocol; and a distributing component, configured to distribute group table resources of a group table, which are issued by the group table configuration unit and received through the established connection, to a logical switch.

In an example embodiment, the distributing component includes: a second acquiring element, configured to acquire group table resources information of the group table resources by using a get-config operation in the network configuration protocol.

In an example embodiment, the distributing component includes: a second modifying element, configured to modify the group table resources by using an edit-config operation in the network configuration protocol.

In an example embodiment, the distributing component includes: a second deleting element, configured to delete the group table resources by using a delete-config operation in the network configuration protocol.

According to another embodiment of the present disclosure, a capable switch is provided, including the above device.

According to another embodiment of the present disclosure, a Software Defined Network (SDN) system is provided, including the above group table configuration unit and the above capable switch.

Through the embodiments, a connection is established with a capable switch according to a network configuration protocol; and through the established connection, group table resources of the group table are issued to a logical switch in the capable switch. The present disclosure solves the problem in the related art of how to conduct complete configuration on effective resources in the group table resources, and then achieves the effect of conducting effective and complete configuration on the group table resources.

### Brief Description of the Drawings

The accompanying drawings described here are used for providing a deeper understanding of the present disclosure, and constitute a part of the application; schematic embodiments of the present disclosure and description thereof are used for illustrating the present disclosure and not intended to form an improper limit to the present disclosure. In the accompanying drawings:
Fig. 1 is an application diagram of an OpenFlow configuration protocol and OpenFlow in a related art;
Fig. 2 is a flowchart of a method 1 for processing an OpenFlow-based group table according to an embodiment of the present disclosure;
Fig. 3 is a flowchart of a method 2 for processing an OpenFlow-based group table according to an embodiment of the present disclosure;
Fig. 4 is a structure diagram of a device 1 for processing an OpenFlow-based group table according to an embodiment of the present disclosure;
Fig. 5 is an example structure diagram 1 of the issuing component 44 in the device 1 for processing the OpenFlow-based group table according to an embodiment of the present disclosure;
Fig. 6 is an example structure diagram 2 of the issuing component 44 in the device 1 for processing the OpenFlow-based group table according to an embodiment of the present disclosure;
Fig. 7 is an example structure diagram 3 of the issuing component 44 in the device 1 for processing the OpenFlow-based group table according to an embodiment of the present disclosure;
Fig. 8 is an example structure diagram 4 of the issuing component 44 in the device 1 for processing the OpenFlow-based group table according to an embodiment of the present disclosure;
Fig. 9 is a structure diagram of a group table configuration unit according to an embodiment of the present disclosure;
Fig. 10 is a structure diagram of a device 2 for processing an OpenFlow-based group table according to an embodiment of the present disclosure;
Fig. 11 is an example structure diagram 1 of the distributing component 94 in the device 2 for processing the OpenFlow-based group table according to an embodiment of the present disclosure;
Fig. 12 is an example structure diagram 2 of the distributing component 94 in the device 2 for processing the OpenFlow-based group table according to an embodiment of the present disclosure;
Fig. 13 is an example structure diagram 3 of the distributing component 94 in the device 2 for processing the OpenFlow-based group table according to an embodiment of the present disclosure;
Fig. 14 is a structure diagram of a capable switch according to an embodiment of the present disclosure;
Fig. 15 is a structure diagram of an SDN system according to an embodiment of the present disclosure;
Fig. 16 is a flowchart of a method for configuring a group table in the SDN according to an example implementation of the present disclosure; and
Fig. 17 is a diagram of parameters of a configured group table in the SDN according to an example implementation of the present disclosure.

### Detailed Description of the Embodiments

The present disclosure is described below with reference to the drawings and embodiments in detail. It is important to note that the embodiments of the present disclosure and the characteristics in the embodiments may be combined under the condition of no conflicts.

The present embodiment provides a method for processing an OpenFlow-based group table. Fig. 2 is a flowchart of a method 1 for processing an OpenFlow-based group table according to an embodiment of the present disclosure; as shown in Fig. 2, the flow includes the following steps:
Step S202: a connection is established with a capable switch through according to a network configuration protocol; and
Step S204: through the established connection, group table resources of a group table are issued to a logical switch in the capable switch.

From the above steps, a group table configuration unit establishes a connection with the capable switch according to the network configuration protocol, and issues complete group table resources to the logical switch in the capable switch. The present disclosure solves the problem in the related art of how to conduct complete configuration on effective resources in the group table resources, and then achieves the effect of conducting effective and complete configuration on the group table resources.

Wherein, the group table resources are group table resources distributed to the logical switch. There may be multiple types of group table resources; for example, the group table resources may include at least one of the followings: the maximum number of supported group table entries, the maximum number of supported buckets, the group type, the group capability, and the action type of the group table, wherein the maximum number of supported group table entries refers to the maximum number of entries supported by each group type; there are four group types, which are all, select, indirect, and fast failover; all refers to that all buckets in a group are executed, select refers to that a bucket in the group is executed, indirect refers to that a bucket defined in the group is executed, and fast failover refers to that the first active bucket is executed; group capabilities include: weight, liveness, chaining, and chaining_check.

Through the connection established according to the network configuration protocol, the group table configuration unit and the capable switch may adopt various manner to operate; for example, through the established connection, issuing the group table resources of the group table to the logical switch in the capable switch may include that: the group table resources of the group table are issued to the logical switch in the capable switch by using an edit-config operation in the network configuration protocol. For another example, through the established connection, issuing the group table resources of the group table to the logical switch in the capable switch may also include that: the issued group table resources are modified by using an edit-config operation in the network configuration protocol. For another example, through the established connection, issuing the group table resources of the group table to the logical switch in the capable switch may also include that: the issued group table resources are deleted by using a delete-config operation in the network configuration protocol.

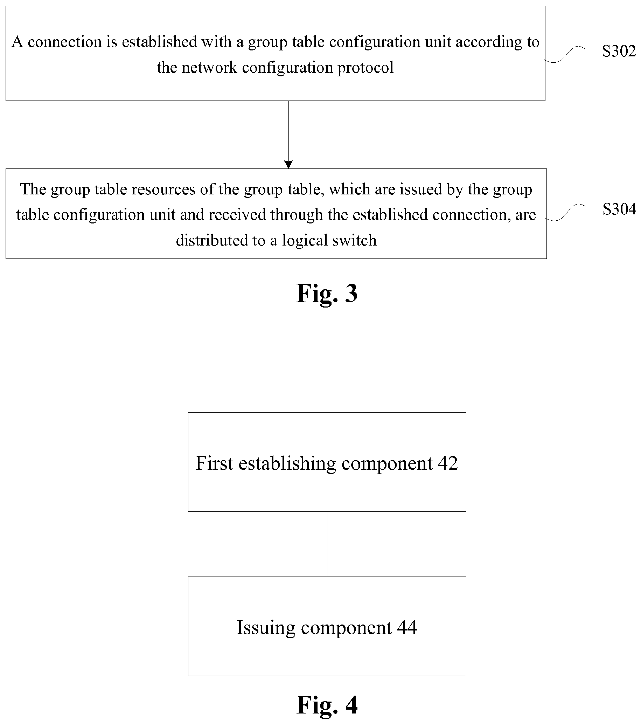

In the present embodiment, a method for processing an OpenFlow-based group table is further provided. Fig. 3 is a flowchart of a method 2 for processing an OpenFlow-based group table according to an embodiment of the present disclosure; as shown in Fig. 3, the method includes the following steps:
Step S302: a connection is established with a group table configuration unit according to a network configuration protocol; and
Step S304: group table resources of a group table, which are issued by the group table configuration unit and received through the established connection, are distributed to a logical switch.

From the above steps, the capable switch distributes the received group table resources to each logical switch in the capable switch after receiving the complete group table resources issued by the group table configuration unit through the connection established with the group table configuration unit according to the network configuration protocol. The present disclosure solves the problem in the related art of how to conduct complete configuration on effective resources in the group table resources, and then achieves the effect of conducting effective and complete configuration on the group table resources.

Similarly, through the connection established according to the network configuration protocol, the group table configuration unit and the capable switch may adopt various manners to operate; for example, distributing the group table resources of the group table, which are issued by the group table configuration unit and received through the established connection, to the logical switch may include that: group table resources information of the group table resources is acquired by using a get-config operation in the network configuration protocol. For another example, the group table resources are modified by using an edit-config operation in the network configuration protocol. For another example, the group table resources are deleted by using a delete-config operation in the network configuration protocol.

The present embodiment further provides a device for processing an OpenFlow-based group table; the device is applied to implementing the above embodiments and example implementations, and these which have been illustrated will not be repeated here. The term "component" may implement a combination of software and/or hardware with expected functions. Although the device described in the following embodiment is implemented by software preferably, the implementation through hardware, or the combination of software and hardware is possible and conceived.

Fig. 4 is a structure diagram of a device 1 for processing an OpenFlow-based group table according to an embodiment of the present disclosure; as shown in Fig. 4, the device includes a first establishing component 42 and an issuing component 44. The device is described below.

The first establishing component 42 is configured to establish a connection with the capable switch according to the network configuration protocol; the issuing component 44 is connected to the first establishing component 42 and configured to issue, through the established connection, group table resources of a group table to a logical switch in the capable switch.

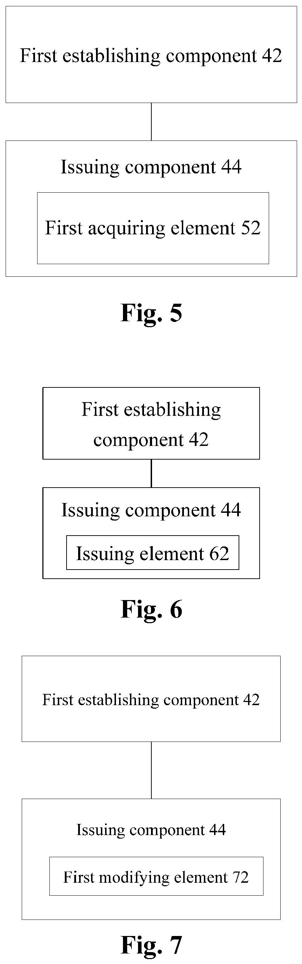

Fig. 5 is an example structure diagram 1 of the issuing component 44 in the device 1 for processing the OpenFlow-based group table according to an embodiment of the present disclosure; as shown in Fig. 5, the issuing component 44 includes a first acquiring element 52. The first acquiring element 52 is described below.

The first acquiring element 52 is configured to acquire group table resources information of the group table resources by using a get-config operation in the network configuration protocol.

Fig. 6 is an example structure diagram 2 of the issuing component 44 in the device 1 for processing the OpenFlow-based group table according to an embodiment of the present disclosure; as shown in Fig. 6, the issuing component 44 includes an issuing element 62. The issuing element 62 is described below.

The issuing element 62 is configured to issue group table resources of the group table to the logical switch in the capable switch by using an edit-config operation in the network configuration protocol.

Fig. 7 is an example structure diagram 3 of the issuing component 44 in the device 1 for processing the OpenFlow-based group table according to an embodiment of the present disclosure; as shown in Fig. 7, the issuing component 44 includes a first modifying element 72. The first modifying element 72 is described below.

The first modifying element 72 is configured to modify the issued group table resources by using an edit-config operation in the network configuration protocol.

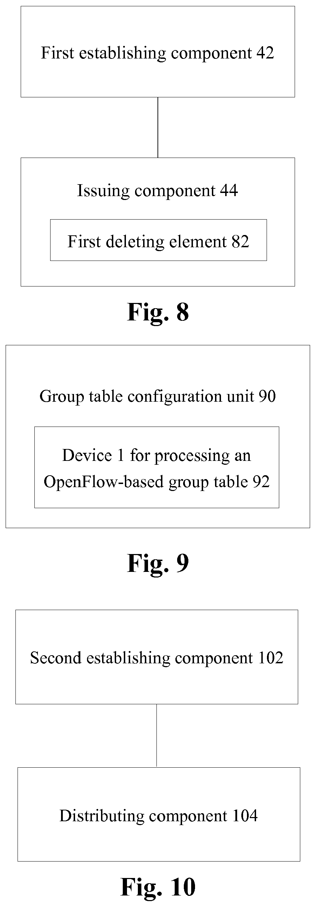

Fig. 8 is an example structure diagram 4 of the issuing component 44 in the device 1 for processing the OpenFlow-based group table according to an embodiment of the present disclosure; as shown in Fig. 8, the issuing component 44 includes a first deleting element 82. The first deleting element 82 is described below.

The first deleting element 82 is configured to delete the issued group table resources by using a delete-config operation in the network configuration protocol.

Fig. 9 is a structure diagram of a group table configuration unit according to an embodiment of the present disclosure; as shown in Fig. 9, the group table configuration unit 90 includes the above device 1 92 for processing the OpenFlow-based group table.

Fig. 10 is a structure diagram of a device 2 for processing an OpenFlow-based group table according to an embodiment of the present disclosure; as shown in Fig. 10, the device includes: a second establishing component 102 and a distributing component 104. The device is described below.

The second establishing component 102 is configured to establish a connection with the group table configuration unit according to the network configuration protocol; and the distributing component 104 is connected to the second establishing component 102 and configured to distribute group table resources of the group table, which are issued by the group table configuration unit and received through the established connection, to a logical switch.

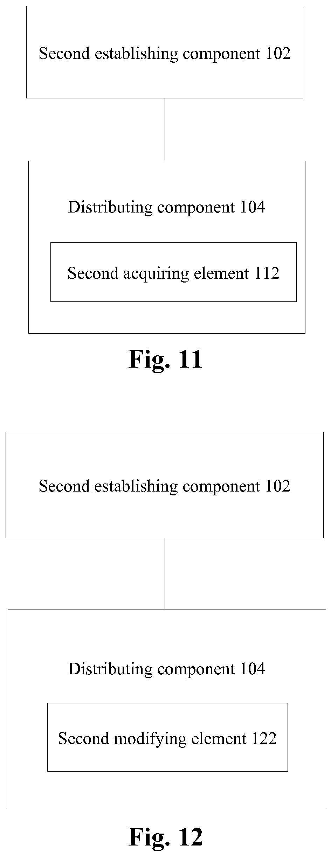

Fig. 11 is an example structure diagram 1 of the distributing component 104 in the device 2 for processing the OpenFlow-based group table according to an embodiment of the present disclosure; as shown in Fig. 11, the distributing component 104 includes a second acquiring element 112. The second acquiring element 112 is described below.

The second acquiring element 112 is configured to acquire group table resources of the group table resources by using a get-config operation in the network configuration protocol.

Fig. 12 is an example structure diagram 2 of the distributing component 104 in the device 2 for processing the OpenFlow-based group table according to an embodiment of the present disclosure; as shown in Fig. 12, the distributing component 104 includes a second modifying element 122. The second modifying element 122 is described below.

The second modifying element 122 is configured to modify the group table resources by using an edit-config operation in the network configuration protocol.

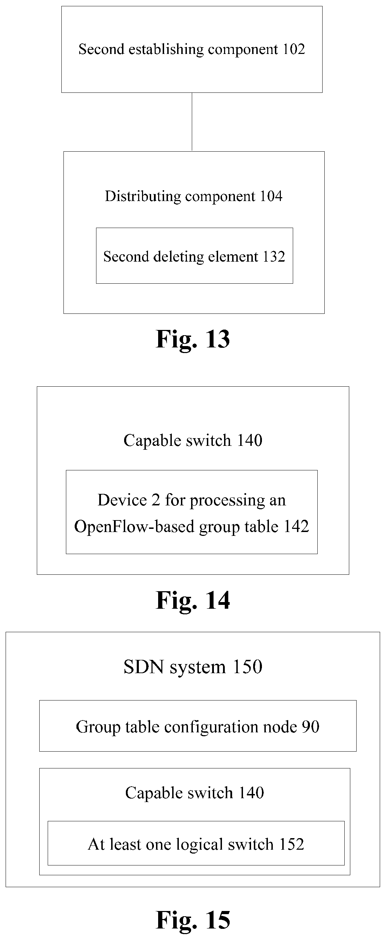

Fig. 13 is an example structure diagram 3 of the distributing component 104 in the device 2 for processing the OpenFlow-based group table according to an embodiment of the present disclosure; as shown in Fig. 13, the distributing component 104 includes a second deleting element 132. The second deleting element 132 is described below.

The second deleting element 132 is configured to delete the group table resources by using a delete-config operation in the network configuration protocol.

Fig. 14 is a structure diagram of a capable switch according to an embodiment of the present disclosure; as shown in Fig. 14, the capable switch 140 includes the above device 2 142 for processing the OpenFlow-based group table.

Fig. 15 is a structure diagram of an SDN system according to an embodiment of the present disclosure; as shown in Fig. 15, the SDN system 150 includes the group table configuration unit 90 and the capable switch 140, wherein the capable switch 140 includes at least one logical switch 152.

A description is given below with reference to the example implementations of the present disclosure.

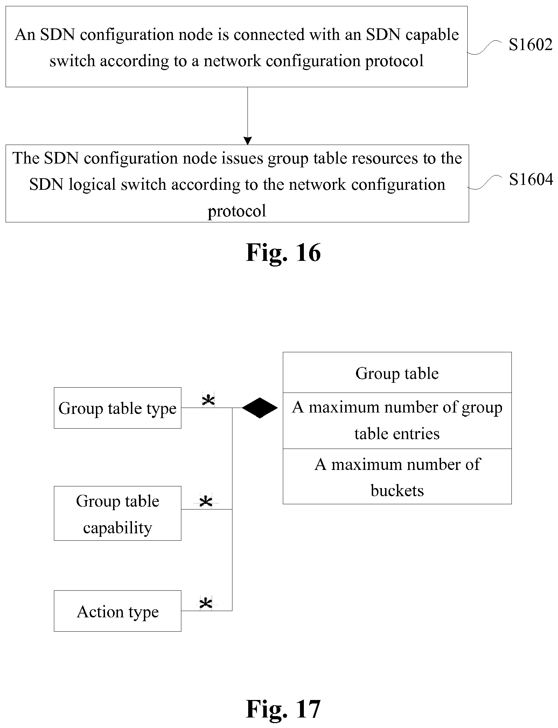

Aiming at the problem in the related art, Fig. 16 is a flowchart of a method for configuring a group table in an SDN according to an example implementation of the present disclosure; as shown in Fig. 16, the method for processing the group table in the SDN includes the following steps:
Step S1602: an SDN configuration node (namely the above group table configuration unit) is connected with an SDN capable switch according to a network configuration protocol; and
Step S1604: the SDN configuration node issues group table resources to an SDN logical switch according to the network configuration protocol.

There may be multiple types of group table resources; for example, the group table resources may include at least one of the followings: a maximum number of supported group table entries, a maximum number of supported buckets, a group type, a group capability, and an action type.

When issuing the group table resources to the SDN logical switch according to the network configuration protocol, the SDN configuration node may perform a lot of processing according to the network configuration protocol. Example embodiments are described as follows.

For example, the group table resources may be issued to an SDN logical switch by using a create action in an edit-config operation of the network configuration protocol. For another example, the group table resources of the SDN logical switch may be modified by using an action (such as a replace action) in an edit-config operation of the network configuration protocol. For another example, the group table resources information of the group table resources may be acquired from the SDN logical switch by using a get-config operation in the network configuration protocol. For another example, the group table resources may also be deleted by using a delete-config operation in the network configuration protocol.

Fig. 17 is a diagram of parameters of a configured group table in the SDN according to an example implementation of the present disclosure; as shown in Fig .17, the group table resources (or called parameters of the configured group table in the SDN) include at least one of the followings: a maximum number of supported group table entries, a maximum number of supported buckets, a group type, a group capability, and an action type.

An example of issuing the group table resources to the OpenFlow logical switch according to the network configuration protocol is described below:

```
    <rpc message-id= "101"
    xmlns="urn:ietf:params:xml:ns:netconf:base:1.0">
        <edit-config>
         <target><candidate/></target>
         <default-operation>none</default-operation>
         <test-option>set</test-option>
          <config>
    <capable switch
    xmlns:nc="urn:ietf:params:xml:ns:netconf:base:1.0">
    nc:operation="create"
    xmlns="urn:onf:of12:config:yang">
    <id>capable switch-0</id>
    <logical-switches>
    <switch>
    <id>logic-switch-1 </id>
    <datapath-id>11:11:11:11:11:11:11:11 </datapath-id>
    <enabled>true</enabled>
    <!--Example for a group entry-->
    <group entry>
    <max-entries>255</max-entries>
    <group entry>
    <max-entries>25</max-entries>
    <group type>
    <type>all</type>
    <type>select</type>
    <type>indirect</type>
    <type>fast failover</type>
    </group type>
    <actions>
    <type>output</type>
    <type>set-queue</type>
    </actions> /*the action is the supported actions for each
    type of groups.*/
    <max_bucket_num>100</max_bucket_num>
    <Bucket>
    <type>weight</type> /*relative weight of bucket. Only defined for
 select group.*/
    <type>watch_port</type> /*Port whose state affects whether this bucket
 is live. Only required for fast failover group.*/
    <type>watch_group</type> /*group whose state affects whether this bucket
 is live. Only required for fast failover group.*/
    </Bucket>
    </group entry>
    <protocol>tcp</protocol>
    </switch>
    </logical-switches>
    </capable switch>
    </config>
    </edit-config>
    </rpc>
```

Obviously, those skilled in the art should appreciate that the above components and steps of the present disclosure can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; and in some situations, the presented or described steps can be executed in an order different from that described here; or they are made into integrated circuit components, respectively; or multiple components and steps of them are made into a single integrated circuit component to realize. In this way, the present disclosure is not limited to any particular combination of hardware and software.

The above is only the preferred embodiment of the present disclosure and not intended to limit the present disclosure; for those skilled in the art, the present disclosure may have various modifications and changes. Any modifications, equivalent replacements, improvements and the like within the spirit and principle of the present disclosure shall fall within the scope of the claims of the present disclosure.

### Industrial Applicability

Through the above embodiments and example implementations, the present disclosure solves the problem in the related art of how to conduct complete configuration on effective resources in the group table resources, and then achieves the effect of conducting effective and complete configuration on the group table resources.

## Claims

1. A method for processing an OpenFlow-based group table, comprising:
establishing a connection with a capable switch according to a network configuration protocol; and
issuing, through the established connection, group table resources of a group table to a logical switch in the capable switch.

2. The method as claimed in claim 1, wherein the group table resources comprise at least one of following:
a maximum number of supported group table entries, a maximum number of supported buckets, a group type, a group capability, and an action type of the group table.

3. The method as claimed in claim 1, wherein issuing, through the established connection, the group table resources of the group table to the logical switch in the capable switch comprises:
acquiring group table resources information of the group table resources by using a get-config operation in the network configuration protocol.

4. The method as claimed in claim 1, wherein issuing, through the established connection, the group table resources of the group table to the logical switch in the capable switch comprises:
issuing the group table resources of the group table to the logical switch in the capable switch by using an edit-config operation in the network configuration protocol.

5. The method as claimed in claim 1, wherein issuing, through the established connection, the group table resources of the group table to the logical switch in the capable switch comprises:
modifying the issued group table resources by using an edit-config operation in the network configuration protocol.

6. The method as claimed in claim 1, wherein issuing, through the established connection, the group table resources of the group table to the logical switch in the capable switch comprises:
deleting the issued group table resources by using a delete-config operation in the network configuration protocol.

7. A method for processing an OpenFlow-based group table, comprising:
establishing a connection with a group table configuration unit according to a network configuration protocol; and
distributing group table resources of a group table, which are issued by the group table configuration unit and received through the established connection, to a logical switch.

8. The method as claimed in claim 7, wherein distributing the group table resources of the group table, which are issued by the group table configuration unit and received through the established connection, to the logical switch comprises:
acquiring group table resources information of the group table resources by using a get-config operation in the network configuration protocol.

9. The method as claimed in claim 7, wherein distributing the group table resources of the group table, which are issued by the group table configuration unit and received through the established connection, to the logical switch comprises:
modifying the group table resources by using an edit-config operation in the network configuration protocol.

10. The method as claimed in claim 7, wherein distributing the group table resources of the group table, which are issued by the group table configuration unit and received through the established connection, to the logical switch comprises:
deleting the group table resources by using a delete-config operation in the network configuration protocol.

11. A device for processing an OpenFlow-based group table, comprising:
a first establishing component, configured to establish a connection with a capable switch according to a network configuration protocol; and
an issuing component, configured to issue, through the established connection, group table resources of a group table to a logical switch in the capable switch.

12. The device as claimed in claim 11, wherein the issuing component comprises:
a first acquiring element, configured to acquire group table resources information of the group table resources by using a get-config operation in the network configuration protocol.

13. The device as claimed in claim 11, wherein the issuing component comprises:
an issuing element, configured to issue the group table resources of the group table to the logical switch in the capable switch by using an edit-config operation in the network configuration protocol.

14. The device as claimed in claim 11, wherein the issuing component comprises:
a first modifying element, configured to modify the issued group table resources by using an edit-config operation in the network configuration protocol.

15. The device as claimed in claim 11, wherein the issuing component comprises:
a first deleting element, configured to delete the issued group table resources by using a delete-config operation in the network configuration protocol.

16. A group table configuration unit, comprising the device as claimed in any one of claims 11 to 15.

17. A device for processing an OpenFlow-based group table, comprising:
a second establishing component, configured to establish a connection with a group table configuration unit according to a network configuration protocol; and
a distributing component, configured to distribute group table resources of a group table, which are issued by the group table configuration unit and received through the established connection, to a logical switch.

18. The device as claimed in claim 17, wherein the distributing component comprises:
a second acquiring element, configured to acquire group table resources information of the group table resources by using a get-config operation in the network configuration protocol.

19. The device as claimed in claim 17, wherein the distributing component comprises:
a second modifying element, configured to modify the group table resources by using an edit-config operation in the network configuration protocol.

20. The device as claimed in claim 17, wherein the distributing component comprises:
a second deleting element, configured to delete the group table resources by using a delete-config operation in the network configuration protocol.

21. A capable switch, comprising the device as claimed in any one of claims 17 to 20.

22. A Software Defined Network, SDN, system, comprising the group table configuration unit as claimed in claim 16 and the capable switch as claimed in claim 21.
